# EUROPÄISCHE PATENTANMELDUNG

(11) **EP 1 685 912 A2**
(43) Veröffentlichungstag der Anmeldung: **02.08.2006**
(21) Anmeldenummer: 06001517.9
(22) Anmeldetag: 25.01.2006
(51) Int. Cl.: B07B 4/02, G01N 15/06

(54) **Messvorrichtung zur Bestimmung des Staubungsverhaltens von dispersen Systemen**

(30) Priorität: 28.01.2005 DE 102005004273
(71) Anmelder: AnaTec AS, 3908 Porsgrunn (NO)
(72) Erfinder: Waggeling, Robert, 47053 Duisburg (DE); Jörgensen, Terje, 3717 Skien (NO); Frode, Reinhold, 3715 Skien (NO)
(74) Vertreter: LENZING GERBER

(57) **Zusammenfassung**

Die Erfindung betrifft eine Vorrichtung zur off- und online Ermittlung des in weiten Grenzen definierbaren staubendenden Anteiles eines dispersen Mediums, wobei die Meßvorrichtung das Medium in einen Staub - und einen Grobanteil trennt, wobei die Meßvorrichtung zur Trennung des Mediums eine Blaseinrichtung (5) aufweist, die den Staubanteil (M_{F}) mittels eines Trennungsgases aus dem Probenmedium (2) heraus in einen Kanal (K) bläst, wobei der Kanal (K) den Staubanteil (M_{F}) einer nachgeschalteten Meßeinrichtung (15) zuführt.

## Beschreibung

Die vorliegende Erfindung betrifft eine Meßvorrichtung zur Ermittlung des interessierenden Staubanteiles eines dispersen Mediums, wobei die Vorrichtung das Medium in einen Staub- und einen Grobanteil trennt.

Die Erfindung bezieht sich insbesondere auf eine modular aufgebaute Meßvorrichtung zur kontinuierlichen oder diskontinuierlichen Bestimmung des Staubungsverhaltens von dispersen Medien, welches sich aus gröberem und feinerem Material zusammensetzen.

Die messtechnische Erfassung möglicher Staubentwicklungen gewinnt in vielen Produktionszweigen immer mehr an Bedeutung. Unter den Gesichtspunkten Toxizität, Umweltbelastung, Staubexplosionen, Verarbeitbarkeit und Arbeitshygiene wird die Produktion möglichst staubfreier Produkte immer wichtiger. Zum Beispiel soll ein Pflanzenschutzmittel beim Ausbringen gezielt nur die betroffenen Pflanzgebiete erreichen und deshalb möglichst wenig staubende Anteile enthalten, die bereits bei geringsten Windgeschwindigkeiten benachbarte Gebiete kontaminieren würden. Deshalb müssen bei der Entwicklung, der Produktion und der Applikation von Pflanzenschutzmitteln geeignete Meßmethoden zur Verfügung stehen, die mit ausreichender Genauigkeit das eventuelle Staubungsverhalten des Produktes beschreiben. Die vorliegende Erfindung stellt ein Meßsystem zur Verfügung, das diese Untersuchungen schon früh im Verfahren und online erlaubt.

Es sind Meßvorrichtungen zur Bestimmung des Staubungsverhaltens von dispersen Medien bekannt, die nach unterschiedlichen Methoden das Staubungsverhalten von Feststoffen ermitteln. Es wird in diesem Zusammenhang nur beispielhaft auf die Zusammenfassung "Dustiness Estimation Methods for dry materials, Technical Guide No.4, British Occupational Hygiene Society, 1985 verwiesen. Die vorbekannten Messgeräte verwenden gravimetrische oder optische Verfahren, bei denen zunächst durch gezielte Beanspruchung eine Staubwolke erzeugt wird, die dann durch Abscheidung und Wägung oder Transmissions- und/oder Streulichtmethoden in ihrer Konzentration bestimmt wird.

Eine oft und in den unterschiedlichsten Industriezweigen genutzte Methode ist die Fallrohrmethode, welche u.a. bei Bürkholz in STAUB - Reinhaltung der Luft 49(1989) Seite 433 - 438 beschrieben ist. Bei dieser Methode wird das Produkt aus einer vorgegebenen Höhe in einen Prallkasten fallen gelassen und dann die entstehenden Staubwirbel und deren Absetzverhalten durch den zeitlichen Verlauf der Lichtschwächung (Transmissions-Signal) bestimmt. Der Messvorgang wird dabei offline mit Labormessgeräten durchgeführt.

Das vorbeschriebene Verfahren weist mehrere Nachteile auf. Z.B. nimmt auch bei zeitoptimierter Anwendung die Bestimmung der Staubungsfähigkeit mit Labormethoden ca. 20 Minuten in Anspruch. Weiterhin sind die eingesetzten Probemengen sehr klein und damit ist die statistische Ergebnissicherheit sehr gering.

Die durch Prall zugeführte Dispergierenergie der bekannten Methoden beschränkt sich zudem auf einen sehr engen Bereich und die Wirbelbildung in der Beanspruchungszone verursacht starke Intensitätsschwankungen, d.h. Meßwertschwankungen und Ungenauigkeiten bei der Meßwerterfassung.

Aufgabe der vorliegenden Erfindung ist deshalb die Bereitstellung einer Meßvorrichtung, welche automatische Bestimmungen des Staubungsverhaltens von Feststoffen off- und online ermöglicht.

Diese Aufgabe wird erfindungsgemäß mit einer Meßvorrichtung mit den Merkmalen des Anspruch 1 gelöst. Vorteilhafte Ausgestaltungen der Meßvorrichtung nach Anspruch 1 ergeben sich durch die Merkmale der Unteransprüche.

Durch den Einsatz gezielt einstellbarer Dispergierenergie und der Blas- und/oder Saugvorrichtung ist es möglich, kontinuierlich oder diskontinuierlich das Medium in seinen Grob- und Staubanteil zu trennen, wonach der Staubanteil mittels einer Meßvorrichtung bestimmbar ist. Ebenso ist es möglich, den Grobanteil mittels geeigneter Meßverfahren, wie z.B. gravimetrischer oder kapazitiver Verfahren zu bestimmen. Gleichsam können sowohl der Staubanteil als auch der Grobanteil gleichzeitig bestimmt werden. Sofern lediglich ein Anteil bzw. dessen Gewicht und/oder Volumen bestimmt wird, muß vorab die Menge bzw. das Volumen oder das Gewicht des noch nicht getrennten Mediums mittels einer geeigneten Vorrichtung bestimmt werden. Das disperse Medium kann dabei z.B. über eine Vibrationsrinne der Blasvorrichtung zugeführt werden, wobei mittels der Vibrationsrinne pro Zeiteinheit eine genau bestimmbare Menge des zu trennenden Mediums der Blaseinrichtung zuführbar ist.

Erfindungsgemäß kann die Meßvorrichtung zur Ermittlung des Staubungsverhaltens von Feststoffen folgende Komponenten aufweisen:
1. Eine Probeentnahme aus einer interessierenden Stelle der Produktionsanlage;
2. Eine Einrichtung zum kontrollierten Probentransport und zur Zuführung der Probeentnahme zur nachgeordneten Trenneinrichtung;
3. Eine Einrichtung zum Trennen des Probemediums in einen Staub- und einen Grobanteil, wobei die Einrichtung insbesondere eine Blas- und /oder Saugeinrichtung aufweist;
4. Eine Meßvorrichtung, zur Konzentrationsbestimmung des abgetrennten, staubenden Produktanteiles;
5. Transport und die Abscheidung von Grobgut und Staubanteil nach der Trennung;
6. Datenverarbeitungsanlage zur Auswertung, Visualisierung und Speicherung der Staub-Konzentrationssignale.

In einer vorteilhaften Ausgestaltung der erfindungsgemäßen Meßvorrichtung kann der Probe ein Treibgas zugeführt werden, welches die Trennung des interessierenden Staubanteils vom Grobanteil unterstützt, in dem es die notwendige Trennungsenergie gezielt zur Verfügung stellt. Zudem kann vorteilhaft die Geschwindigkeit, mit der die Probe der Trennungseinrichtung zugeführt wird, eingestellt werden, wodurch die Zeit, welche das Medium zum Durchstreichen der Trennungseinrichtung benötigt und die Dispergierenergie, einstellbar ist.

Die Meßvorrichtung weist vorteilhaft Lichtquellen und Meßsensoren auf zur Erfassung von Transmissions-, Streulicht-, abbildenden Methoden und/oder Beugungssignalen zur Bestimmung des Staubanteils bzw. der Staubkonzentrationen- und Größenverteilungen. Es ist selbstverständlich möglich, dass als Sensor eine Kamera oder ein Farbsensor verwendet wird. So ist es möglich, auch Abbildungen des Staubanteils und/oder dessen Farbe auszuwerten. Die Lichtquellen und Meßsensoren können vorteilhaft in der Staubanteiltransportleitung installiert und mit einer Steuer- und Auswerteeinheit verbunden sein, die zum Beispiel aus einem Mikrocontroller oder einem Rechner besteht und nach der Auswertung die Ergebnisse auf einem Monitor oder Drucker oder einem Netzwerk als Tabelle oder Diagramm zur Verfügung stellt oder zur Steuerung und Regelung von Prozessen verwendet wird. Ebenso ist es möglich, mittels einer Kombination der zuvor genannten Sensoren, Kameras, etc. verschiedene Eigenschaften des Staubanteils zu analysieren und auszuwerten.

Mit der erfindungsgemäßen Meßvorrichtung wird ein von der in weiten Grenzen einstellbaren Trenngrenze zwischen vorzugsweise 1 und 500 Mikrometer und der Konzentration des abgetrennten Feingutanteiles (= staubender Anteil) abhängiges Transmissions- oder/und Streulicht- bzw. Beugungssignal oder abbildenden Methoden erfaßt. Somit können in hoher zeitlicher Auflösung (t < 1s), mit großen Produktmengen von vorzugsweise 1 bis 100 kg/h, mit gezielt einstellbarer Dispergierenergie und Trenngrenzen- zwischen vorzugsweise 1 und 500 Mikrometer - prozeßbegleitende Staubgehaltsbestimmungen durchgeführt werden.

Im Rahmen der Erfindung ist bevorzugt eine Steuer- und Auswerteeinheit zu verwenden, die die vorzugsweise optischen Signale über einen frei zu wählenden Zeitraum mittelt, um in Abhängigkeit von der gewählten Zeitskala Produktinhomogenitäten sicher zu erkennen oder auswertetechnisch zu vergleichmäßigen. Zur Konzentrationsbestimmung der interessierenden Produktanteile sind neben der Auswertung der beschriebenen optischen Signale auch andere Methoden wie z.B. gravimetrische-, kapazitive- oder Ultraschallverfahren anwendbar.

Durch Verwendung von Lichtwellenleitern für Sender und Empfänger kann besonders für explosionsgefährdete Bereiche eine hohe Gerätesicherheit erreicht werden. Auch kann die Trennung in einem Schutzgas erfolgen.

Eine weitere bevorzugte Ausführungsform verwendet einen möglichst staubfreien Spülgasstrom, um die Verschmutzung der eingesetzten optischen Komponenten zu verhindern.

Für die reproduzierbare Einstellung von Dispergierenergie und Trenngrenze werden z.B. für den bevorzugten Fall der Querstromsichtung Meßeinrichtungen zur Bestimmung, Kontrolle, Steuerung und Regelung der Gasvolumen- und Feststoffströme eingesetzt.

Für die Durchführung von Test- und Kontrollmessungen mit Probensubstanzen wird die Licht- und Detektoreinheit über die integrierte- oder eine externe Dosiereinheit mit Material bekannten Staubungsverhaltens beaufschlagt oder ein mechanischer Streu- und Blockadekörper - z.B. ein Stahlstift mit einem Durchmesser von 2mm - von Hand oder automatisch kurzzeitig in den Meßquerschnitt eingebracht.

Die vorliegende Erfindung stellt somit eine modular aufgebaute Vorrichtung zur schnellen, zuverlässigen und sicheren Kontrolle des Staubungsverhaltens von z.B. Feststoffen dar, welches vorzugsweise online in Produktionsanlagen eingesetzt werden kann.

Was als Staubanteil und was als Grobgut im Sinne der Erfindung gelten soll, ist für jeden Anwendungsfall verschieden. So bestimmt der Anwender was für ihn der Feinanteil bzw. Staubanteil ist. Der vom Anwender definierte Staubanteil bestimmt dann die Trenngrenze und die erforderliche Dispergierleistung. Die jeweiligen Parameter der Vorrichtung sind dann entsprechend einzustellen.

Eine bevorzugte Ausführungsform wird anhand der Figuren näher erläutert.

### Es zeigen:

- Fig. 1:: Erfindungsgemäße Vorrichtung;
- Fig. 2:: Detaildarstellung der Probenzufuhr und Trennung;
- Fig. 3:: alternative Trennvorrichtung mit nicht dargestellter Saugeinrichtung;
- Fig. 4:: weitere mögliche Ausführungsform einer Trennvorrichtung mit einer Blasvorrichtung, wobei optional eine Saugvorrichtung zusätzlich vorgesehen werden kann.

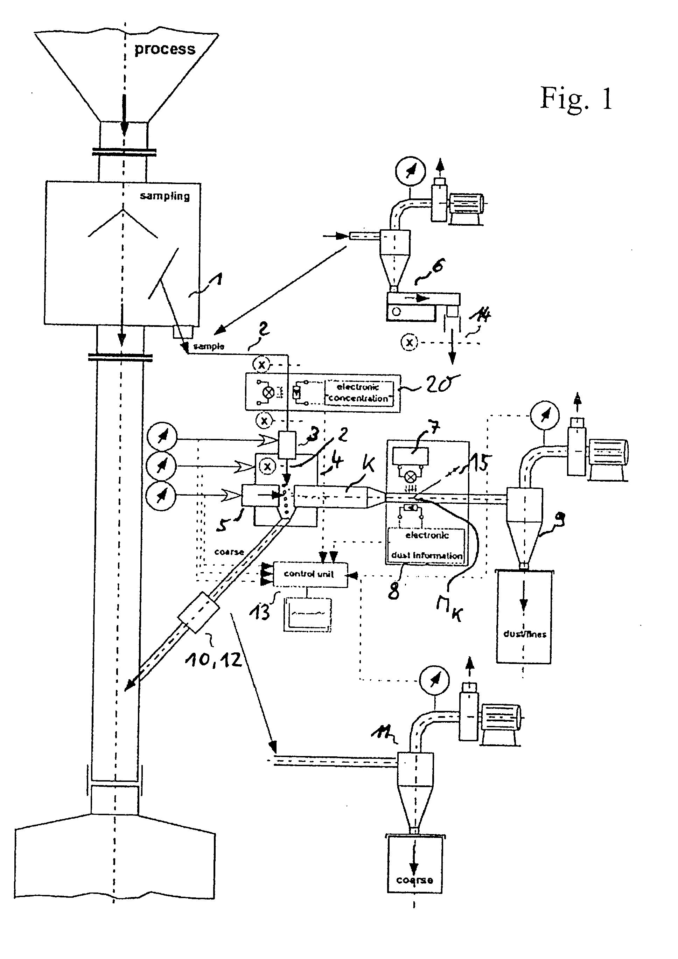

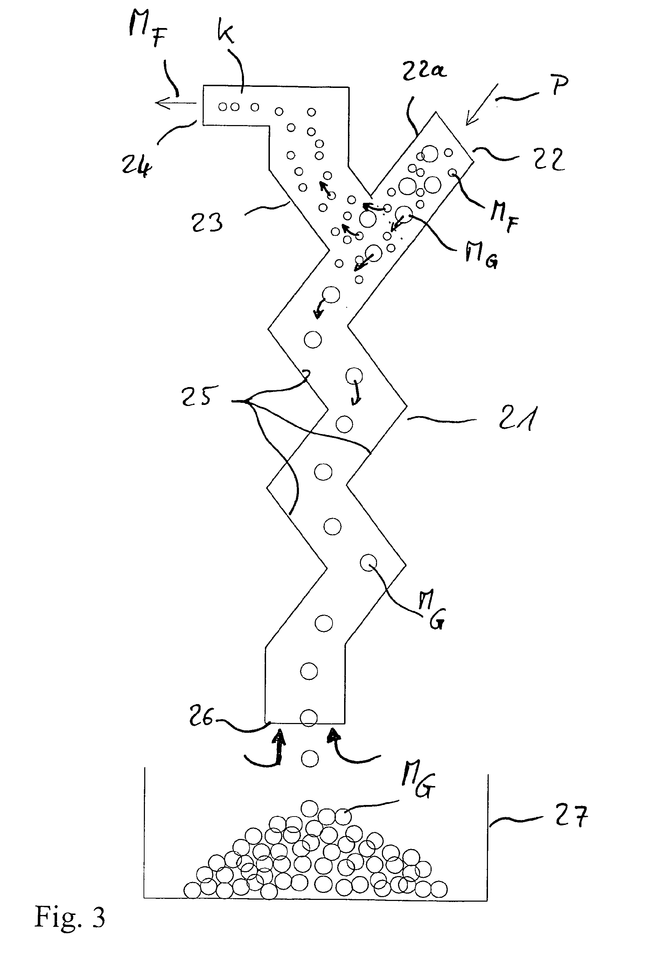

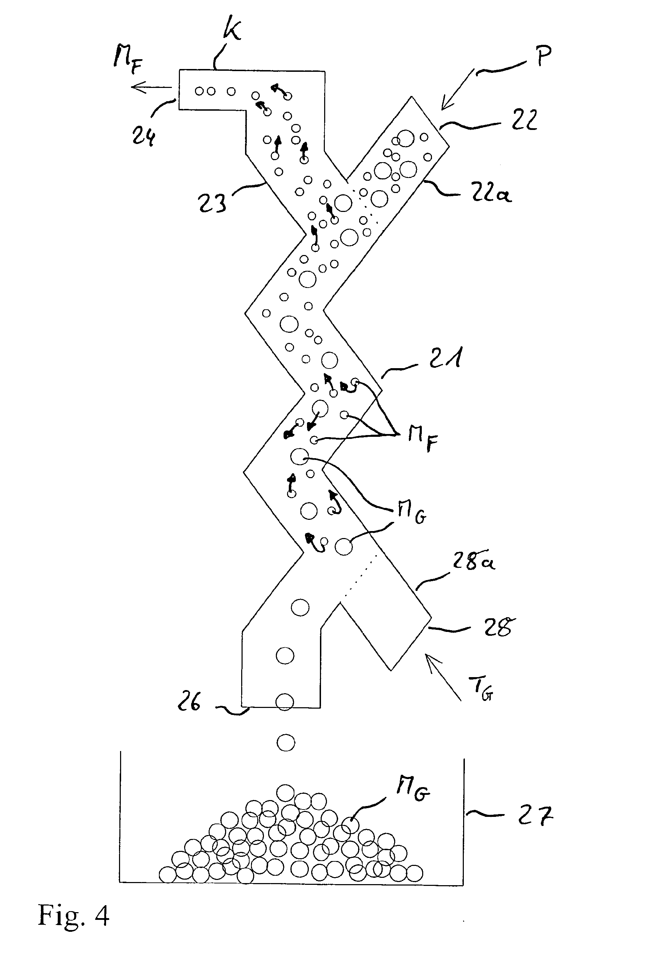

Eine erste Ausführungsform der erfindungsgemäßen Vorrichtung zur Untersuchung des Staubungsverhaltens von dispersen Medien nach Figur 1 besteht aus einer geeigneten Probenentnahmeeinrichtung 1 zur Entnahme einer repräsentativen Probe aus dem Prozeß. Von der Probenentnahme gelangt die Probe automatisch mittels mechanischem oder pneumatischem Transport 2 zur ersten Meßeinrichtung 20, welche eine Konzentrationsmessung der noch nicht getrennten Probe vornimmt. Alternativ kann zur Bestimmung der Probenmenge eine Vibrationsrinne 6 mit Fallrohr 14 oder eine Dosierschnecke (nicht dargestellt) verwendet werden. Von der Meßeinrichtung 20 gelangt die Probe zu einer Zuführeinrichtung 3, welche durch einen Ringdüsen- oder einen Zentraldüseninjektor gebildet sein kann. Mittels des über den Ringdüsen- bzw. Zentraldüseninjektor zuführbaren Treibgases, dessen Geschwindigkeit und Druck vorgebbar ist, kann die Geschwindigkeit des Probenstroms bzw. des der nachgeschalteten Trenneinrichtung zugeführten Mediums eingestellt oder - geregelt werden. Typische Geschwindigkeiten sind 0 bis 300m/s. Das Treibgas dient der gezielten Dispergierung und Trennung des Staubanteils vom Grobanteil. Der Injektor weist ein glattes Rohr auf. Das Rohr kann jedoch auch Einbauten zur Umleitung des Probenmediums z.B. einen Zick-Zack-Kanal, der nachfolgend in den Figuren 3 und 4 dargestellt ist, aufweisen.

Das mit dem Treibgas versetzte Probenmedium gelangt anschließend in die Trennungseinrichtung 4, welche eine Blaseinrichtung 5 aufweist. Die Blaseinrichtung 3 verfügt über eine Sichterdüse, mittels derer Treibgas von der Seite vorzugsweise senkrecht auf den Probenstrom blasbar ist, wodurch der Probenstrom in die Teilströme M_{F} und M_{G} aufgeteilt wird. Der Volumenstrom und Druck des Treibgases ist wiederum einstellbar. Die Sichterdüse 5 kann durch eine Schlitzdüse oder Düsenplatte mit ein oder mehreren Schlitzen von ca. 2x50mm gebildet sein, wobei das Treibgas mit einer Geschwindigkeit von 0 bis 30 m/s aus der Düse austreten kann. Selbstverständlich sind andere Geschwindigkeiten und Abmessungen möglich. Sie müssen in jedem Fall an die Gegebenheiten und das zu analysierende Medium angepaßt werden. Der die groben Partikel enthaltene Strom M_{G} fällt nach unten durch die Trenneinrichtung, wogegen der den Feinanteil enthaltene Strom M_{F} in den Kanal K geblasen oder optional gesaugt wird und der zweiten Meßeinrichtung 15 zugeführt wird.

Durch die erfindungsgemäße Anordnung lassen sich die Dispergierenergie und die Trenngrenze in einem weiten Bereich einstellen. So ist bei entsprechender Wahl der einzelnen Parameter, insbesondere der zugeführten Dispergierenergie, ein Trenngrenzenbereich von 1 bis 50 µm bei hoher Dispergierleistung zu erzielen. Die zur Trennung notwendige Geschwindigkeit der Partikel wird durch die Definition des staubenden Anteils, der zu überwindenden Haftkräfte und einer daraus resultierenden Trenngrenze bestimmt. Die Abtrennung des staubenden Produktanteiles erfolgt durch Einstellen des Treibgasstromes in Richtung zum Staubgehaltsmeßeinrichtung 15.

Zur Sicherheit und/oder Einstellung einer bestimmten Umgebungsbedingung kann ein Schutzgas in das Gehäuse der Trenneinrichtung 4 eingeblasen werden, wobei der Volumenstrom und der Druck vorgebbar sind.

Die Meßeinrichtung 15 weist Leuchtmittel 7 auf, die den Meßkanal M_{K} Be- und/oder Durchleuchten. Mindestens ein Detektor 8 ermittelt den Transmissions-, Streulicht- und/oder Beugungsanteil oder eine Abbildung der von dem Leuchtmittel 7 ausgesandten Strahlung, wodurch die Menge und/oder Größenverteilung oder eine charakteristische Abmessung des durch den Meßkanal durchströmenden Staubanteils bestimmbar ist.

Sowohl der Staubanteil als auch das Grobgut kann nach der Trennung und Analyse mechanisch oder pneumatisch zu den nachgeschalteten Komponenten gefördert werden. So ist es möglich, das analysierte Probenmaterial mittels geeigneter Abscheidemodule 9,11 in getrennten oder in einem gemeinsamen Auffangbehälter zu lagern. Ebenso ist es möglich, mittels Transportmodulen 10,12 das Probenmaterial nach der Analyse wieder dem Prozeß zuzuführen.

Die Detektoren und Aktoren der verschiedenen Module sind über Meßleitungen elektrisch, optisch, pneumatisch oder per Funk mit der Steuer- und Auswerteeinheit 13 verbunden. Die Aufgaben zur Steuerung, Regelung und Meßwertabfrage und -verarbeitung der verwendeten Module können mittels Steuer- und Auswerteeinheit beliebig verteilt werden.

Die Untersuchung des kontinuierlich oder in kurzen Zeitabständen zur Verfügung stehenden Probenmaterials beginnt mit der Entnahme von repräsentativen Proben oder eines kontinuierlichen, repräsentativen Probenstromes 1 aus der Produktionsanlage. Nach dem Transport, einer eventuell erforderlichen Probenteilung und anschließender gezielter Dispergierung wird die so vorbereitete Probe im freien Fall oder pneumatisch der Trennungseinrichtung zugeführt und dort in Staubanteil und Grobgut getrennt. Der Staubanteil wird pneumatisch durch den Feingutkanal K zur Meßeinrichtung 15 transportiert und anschließend abgeschieden oder in den Produktionsprozeß zurückgeführt. Das Grobgut wird ebenfalls vorzugsweise pneumatisch transportiert und abgeschieden oder in den Produktionsprozeß zurückgeführt. Die von der Konzentration und der Größenverteilung der Staubpartikel abhängigen Meßsignale werden zeitgleich in der Steuer- und Auswerteeinheit bearbeitet und z.B. als Einheitssignal zur weiteren Verwendung zur Verfügung gestellt.

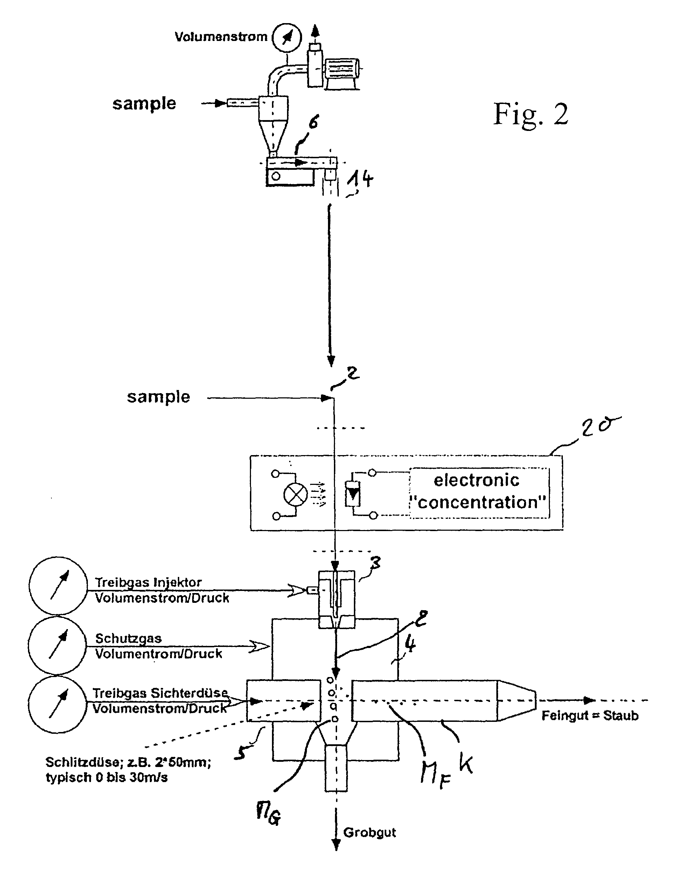

Die Figur 2 zeigt eine vergrößerte Detaildarstellung der Meßvorrichtung gem. Figur 1 ohne die Meßeinrichtung zur Bestimmung des Feinanteils. Die Probe 2 (sample) wird dabei mittels einer Vibrationsrinne 6 und über ein Fallrohr 14 der ersten Meßeinrichtung 20 zugeführt. Die Meßeinrichtung 20 ermittelt die Konzentration der Probe, die zur quantitativen Ermittlung des Staubanteils benötigt wird.

Die Figuren 3 und 4 zeigen weitere mögliche Einrichtungen zur Trennung des zu analysierenden Probenmediums P. Die Trennungseinrichtung besteht aus einem zick-zack-förmigen Rohr 21, welches einen Einlaß 22 aufweist, durch den das Probenmedium P bestehend aus dem Grobanteil M_{G} und dem Staubanteil M_{F} in das Rohr 21 gelangt. Der Einlaß 22 ist durch einen rohrförmigen Stutzen 22a gebildet, welcher mit der Zuführeinrichtung 3 der Figur 1 in Verbindung ist. Oberhalb der Einmündung des Stutzens 22a in das Rohr 21 ist ein Auslaß 24 angeordnet, durch den der Staubanteil M_{F} bei 24 abgesaugt und der Meßeinrichtung zur Analyse des Staubanteils zugeführt wird. Die Bewegung der Partikel mit größerem Gewicht und/oder Durchmesser innerhalb der Trennungseinrichtung ist durch kleine Pfeile dargestellt. Die durch das Rohr 21 herabfallenden Partikel stoßen auf die als Prallflächen 25 wirkenden Innenwandungen des Rohres 21, wodurch die Trennung des Staubanteils vom Grobanteil unterstützt wird. Am unteren Ende des Rohres 21 ist eine Öffnung 26, durch die der Grobanteil MG aus der Trennungseinrichtung austritt. Je nach Ausführung der Gesamtmeßvorrichtung, kann der Grobanteil MG entweder in einem Sammelbehältnis 27 gesammelt oder aber dem Gesamtprozeß wieder zugeführt werden, wie es bereits für die Meßvorrichtung gem. Fig. 1 beschreiben ist. Durch den Auslaß 26 kann die Luft, welche durch die Öffnung 24 abgesaugt wird, nachströmen. Die Luft strömt dabei durch das gesamte Rohr 21, so dass die Strecke, auf der sie den Staubanteil M_{F} mit sich reißen kann, maximal ist.

Die Figur 4 zeigt eine alternative Ausführung der Trennungseinrichtung gem. Fig. 3. Das Rohr weist einen zusätzlichen Einlaßstutzen 28a mit einer Einlaßöffnung 28 im unteren Bereich auf, durch den ein Trennungsgas T_{G} einblasbar ist. Das Trennungsgas wird durch das gesamte Rohr 21 gedrückt und reißt dabei den Staubanteil M_{F} mit nach oben. Durch den Auslaß 24 gelangt der abgetrennte Staubanteil M_{F} zur nachgeschalteten, nicht dargestellten, Meßeinrichtung 15. Der Kanal K kann dabei nach außen hin geschlossen sein, so dass der Feinanteil M_{F} nicht aus der Meßvorrichtung austreten kann. Es ist selbstverständlich möglich, dass eine zusätzliche Absaugvorrichtung eingesetzt wird, welche hinter der Meßeinrichtung 15 angeordnet ist, wodurch die das Trennungsgas T_{G} in das Rohr 21 drükkende bzw. blasende Blaseinrichtung unterstützt wird.

## Patentansprüche

1. Vorrichtung zur Ermittlung des staubenden Anteiles eines dispersen Mediums, wobei die Meßvorrichtung das Medium in einen Staub- und einen Grobanteil trennt, **dadurch gekennzeichnet, dass** die Meßvorrichtung zur Generierung und Trennung des staubendenden Anteiles eine Trenneinrichtung aufweist, wobei die Trenneinrichtung den Staubanteil (M_{F}) aus dem Probenmedium (2) heraus in einen Kanal (K) bläst und/oder saugt, wobei der Kanal (K) den Staubanteil (M_{F}) einer nachgeschalteten Meßeinrichtung (15) zuführt.

2. Meßvorrichtung nach Anspruch 1, **dadurch gekennzeichnet, dass** die Blaseinrichtung (5) mindestens eine Düse, insbesondere eine Schlitzdüse, aufweist, mittels derer ein Trennungsgas im wesentlichen senkrecht auf den Mediumsfluß (2), insbesondere auf den nach unten gerichteten Mediumsfluß (2), blasbar ist, wobei auf der der Düse (5) gegenüberliegenden Seite der Kanal (K) angeordnet ist.

3. Meßvorrichtung nach Anspruch 1 oder 2, **dadurch gekennzeichnet, dass** eine Einrichtung im Eingangsbereich des Kanals einen Unterdruck erzeugt, der den mittels der Blaseinrichtung abgetrennten Staubanteil in den Kanal saugt.

4. Meßvorrichtung nach Anspruch 1, **dadurch gekennzeichnet, dass** die Trenneinrichtung einen im wesentlichen senkrechten Trennungskanal mit einem unteren Auslaß hat, und in den Trennungskanal mittels einer Zuführeinrichtung das zu trennende Medium in einen Einlaß des Trennungskanals einbringbar ist, wobei der Trennungskanal einen weiteren Auslaß aufweist, der oberhalb des unteren Auslasses angeordnet und über den Kanal (K) mit der Meßeinrichtung (15) in Verbindung ist.

5. Meßvorrichtung nach Anspruch 4, **dadurch gekennzeichnet, dass** der Trennungskanal einen Kanal mit mehreren schrägen Prallflächen ist.

6. Meßvorrichtung nach Anspruch 4 oder 5, **dadurch gekennzeichnet, dass** der Trennungskanal durch ein zick-zackförmiges und insbesondere senkrecht angeordnetes Rohr gebildet ist, wobei der Einlaß durch einen schräg nach unten gerichteten Einführstutzen gebildet ist, welcher im oberen Bereich des Rohres angeordnet ist.

7. Meßvorrichtung nach einem der Ansprüche 4 bis 6, **dadurch gekennzeichnet, dass** der Trennungskanal einen weiteren Einlaß zur Zuführung eines Trennungsgases aufweist, der durch einen nach oben gerichteten Einführungskanal gebildet ist, welcher im unteren Bereich des Trennungskanals angeordnet ist.

8. Meßvorrichtung nach einem der vorhergehenden Ansprüche, **dadurch gekennzeichnet, dass** die Trenneinrichtung die Blas- und/oder Saugeinrichtung (5) aufweist.

9. Meßvorrichtung nach einem der vorhergehenden Ansprüche, **dadurch gekennzeichnet, dass** eine Transporteinrichtung den abgetrennten Staubanteil durch den Kanal zur Meßeinrichtung transportiert.

10. Meßvorrichtung nach Anspruch 8, **dadurch gekennzeichnet, dass** die Transporteinrichtung die Saugeinrichtung umfaßt.

11. Meßvorrichtung nach Anspruch 9, **dadurch gekennzeichnet, dass** die Saugeinrichtung hinter der Meßeinrichtung (15) angeordnet ist.

12. Meßvorrichtung nach einem der vorhergehenden Ansprüche, **dadurch gekennzeichnet, dass** die Meßeinrichtung (15) zur Analyse des Staubanteils (M_{F}) einen Analysekanal (M_{K}) aufweist, welcher mit dem Kanal (K) für den Staubanteil (M_{F}) in Verbindung ist und durch den der Staubanteil strömt, wobei der Analysekanal (M_{K}) zumindest gegenüberliegende durchsichtige Wandungsabschnitte aufweist, wobei mindestens ein Leuchtmittel (7) durch einen durchsichtigen Wandungsabschnitt den Staubanteil bescheint und/oder durchleuchtet und mindestens ein Detektor (8) das transmittierte, reflektierte, gebeugte und/oder gestreute Leucht detektiert.

13. Meßvorrichtung nach Anspruch 12, **dadurch gekennzeichnet, dass** die Meßvorrichtung eine Meßeinrichtung (20) aufweist, die die Menge, das Gewicht und/oder das Volumen des der Blaseinrichtung zugeführten Mediums ermittelt.

14. Meßvorrichtung nach Anspruch 12, **dadurch gekennzeichnet, dass** die Meßeinrichtung (20) kapazitiv arbeitende Sensoren, Ultraschallsensoren und/oder gravimetrisch arbeitende Sensoren zur Bestimmung des Gewichts und/oder Volumens des Staubanteils hat.

15. Meßvorrichtung nach einem der vorhergehenden Ansprüche, **dadurch gekennzeichnet, dass** eine Datenerarbeitungseinrichtung (13) aus den Signalen des oder er Detektoren der Meßeinrichtung die Menge bzw. das Volumen und/oder das Gewicht des Staubanteils ermittelt.

16. Meßvorrichtung nach einem der vorhergehenden Ansprüche, **dadurch gekennzeichnet, dass** die Meßvorrichtung eine Probenentnahmeeinrichtung (1) aufweist, welche kontinuierlich oder diskontinuierlich einem Mediumsfluß Probemengen entnimmt.

17. Meßvorrichtung nach einem der vorhergehenden Ansprüche, **dadurch gekennzeichnet, dass** die Meßvorrichtung eine Zuführeinrichtung (3) aufweist, die der Blaseinrichtung (5) kontinuierlich oder in vorbestimmten Mengeneinheiten das zu analysierende Medium zuführt.

18. Meßvorrichtung nach Anspruch 17, **dadurch gekennzeichnet, dass** die Zuführeinrichtung (3) Mittel zum Zuführen eines Treibgases zum zu trennenden Medium hat.

19. Meßvorrichtung nach Anspruch 18, **dadurch gekennzeichnet, dass** das Verhältnis von Treibgas zu Mediumsmenge einstellbar ist.

20. Meßvorrichtung nach einem der Ansprüche 17 bis 19, **dadurch gekennzeichnet, dass** die Zuführeinrichtung das disperse Medium in Richtung der Blaseinrichtung mit einer vorgebbaren Geschwindigkeit, insbesondere mittels einer Dosierschnecke oder einer Vibrationsrinne, fördert.

21. Meßvorrichtung nach Anspruch 20, **dadurch gekennzeichnet, dass** die Zuführeinrichtung (3) einen Injektor, insbesondere in Form einer Düse oder eines Fallrohrs aufweist, mittels derer das zu trennende Medium in Richtung Blaseinrichtung blas- bzw. transportierbar ist.

22. Meßvorrichtung nach Anspruch 21, **dadurch gekennzeichnet, dass** das Medium mittels eines in das Fallrohr (in das auch Prallflächen und Umlenkungen zur zusätzlichen Dispergierung eingebaut sein können) zusätzlich eingebrachten Gasstroms mit vorgebbarer Strömungsgeschwindigkeit und Menge beschleunigbar ist.

23. Meßvorrichtung nach einem der vorhergehenden Ansprüche, **dadurch gekennzeichnet, dass** eine Spül- oder Reinigungsvorrichtung, in Abhängigkeit der Verunreinigung der Meßvorrichtung oder in vorbestimmbaren Zeitintervallen mit einem Gas- oder Flüssigkeitsstrom, alle oder einzelne Komponenten der Meßvorrichtung von Verunreinigungen reinigt.

24. Meßvorrichtung nach Anspruch 23, **dadurch gekennzeichnet, dass** die Meßvorrichtung mindestens einen Sensor hat, der die Meßvorrichtung auf Verunreinigungen hin detektiert, und dass in Abhängigkeit des Meßsignals des Sensors eine Steuereinheit die Analyse des dispersiven Mediums beendet und den Reinigungsvorgang startet.

25. Meßvorrichtung nach einem der vorhergehenden Ansprüche, **dadurch gekennzeichnet, dass** die Meßvorrichtung ein Vorratsbehältnis hat, in dem ein disperses Eichmedium gelagert ist, welches zu Eichzwecken in vorbestimmbaren Zeitabständen der Meßvorrichtung zur Analyse und Eichung zuführbar ist.

26. Meßvorrichtung nach einem der vorhergehenden Ansprüche, **dadurch gekennzeichnet, dass** Transporteinrichtungen die analysierten Staub- und Grobanteile dem Prozeß, welchem die Probe entnommen wurde, wieder zuführen oder die Anteile in mindestens einem Auffangbehältnis mittels Abscheidern gesammelt werden.

27. Verfahren zur Bestimmung des Feinanteils in einem dispersen Medium unter Verwendung einer Meßvorrichtung nach einem der vorhergehenden Ansprüche, **dadurch gekennzeichnet, dass** die Datenverarbeitungseinrichtung anhand der der Blasvorrichtung zugeführten Menge des Mediums und der Menge des Staubanteils den Grobanteil und/oder das Verhältnis von Staub- zu Grobanteil bestimmt.

28. Verfahren nach Anspruch 27, **dadurch gekennzeichnet, dass** zur Bestimmung des Staubanteils die Signale des mindestens einen Sensors über einen vordefinierbaren Zeitraum gemittelt werden.
